# EUROPEAN PATENT APPLICATION

(11) **EP 4 360 859 A1**
(43) Date of publication of application: **01.05.2024**
(21) Application number: 23204508.8
(22) Date of filing: 19.10.2023
(51) Int. Cl.: B29C 73/16

(54) **BOTTLE UNIT AND PUNCTURE REPAIR KIT**

(30) Priority: 27.10.2022 JP 2022172044
(71) Applicant: Sumitomo Rubber Industries, Ltd., Kobe-shi, Hyogo 651-0072 (JP)
(72) Inventor: TATSUMI, Kazuhiro, Kobe-shi, 651-0072 (JP)
(74) Representative: Manitz Finsterwald Patent- und Rechtsanwaltspartnerschaft mbB

(57) **Abstract**

Provided are a bottle unit and a puncture repair kit for performing puncture repair in a short time. A bottle unit 2 for performing filling with a puncture repair liquid R and compressed air A includes a bottle container 4 capable of storing the puncture repair liquid R therein, a supply pipe 5 for supplying the compressed air A into the bottle container 4, and a discharge pipe 6 for mixing and discharging the puncture repair liquid R and the compressed air A from the bottle container 4. The discharge pipe 6 has a first opening 6a opened inside the bottle container 4, and a second opening 6b opened at a position different form the first opening 6a in a height direction of the bottle container 4 inside the bottle container 4.

## Description

### BACKGROUND OF THE INVENTION

### Field of the Invention

The present invention relates to a bottle unit and a puncture repair kit to be used for repairing a punctured tire.

### Background Art

Conventionally, a puncture repair kit for repairing a punctured tire has been known. For example, Japanese Laid-Open Patent Publication No. 2017-056662 proposes a puncture repair kit for repairing a punctured tire by sequentially injecting a puncture repair liquid and compressed air into the punctured tire, with the compressed air from a compressor.

However, when the puncture repair kit of Japanese Laid-Open Patent Publication No. 2017-056662 is used, the puncture repair liquid is injected and then the compressed air is injected. Thus, to close a punctured part with the puncture repair liquid, a large amount of the puncture repair liquid needs to be injected, and the time to be taken for the operation is also long.

The present invention has been made in view of the above circumstances, and a main object of the present invention is to provide a bottle unit and a puncture repair kit for performing puncture repair in a short time.

### SUMMARY OF THE INVENTION

The present invention is directed to a bottle unit for performing filling with a puncture repair liquid and compressed air, and the bottle unit includes a bottle container capable of storing the puncture repair liquid therein, a supply pipe for supplying the compressed air into the bottle container, and a discharge pipe for mixing and discharging the puncture repair liquid and the compressed air from the bottle container. In the bottle unit, the discharge pipe has a first opening opened inside the bottle container, and a second opening opened at a position different from the first opening in a height direction of the bottle container inside the bottle container.

The bottle unit of the present invention allows puncture repair to be performed in a short time by having the above configuration.

### BRIEF DESCRIPTION OF THE DRAWINGS

FIG. 1 is a schematic view of a puncture repair kit according to one embodiment of the present invention;
FIG. 2 is a schematic view of the puncture repair kit when a bottle container is held in a second posture;
FIG. 3 is a schematic view of a puncture repair kit according to a second embodiment;
FIG. 4 is a schematic view of a puncture repair kit according to a third embodiment;
FIG. 5 is a schematic view of a puncture repair kit according to a fourth embodiment; and
FIG. 6 is a schematic view of the puncture repair kit in FIG. 5 when a bottle container is held in a second posture.

### DETAILED DESCRIPTION

Hereinafter, an embodiment of the present invention will be described with reference to the drawings.

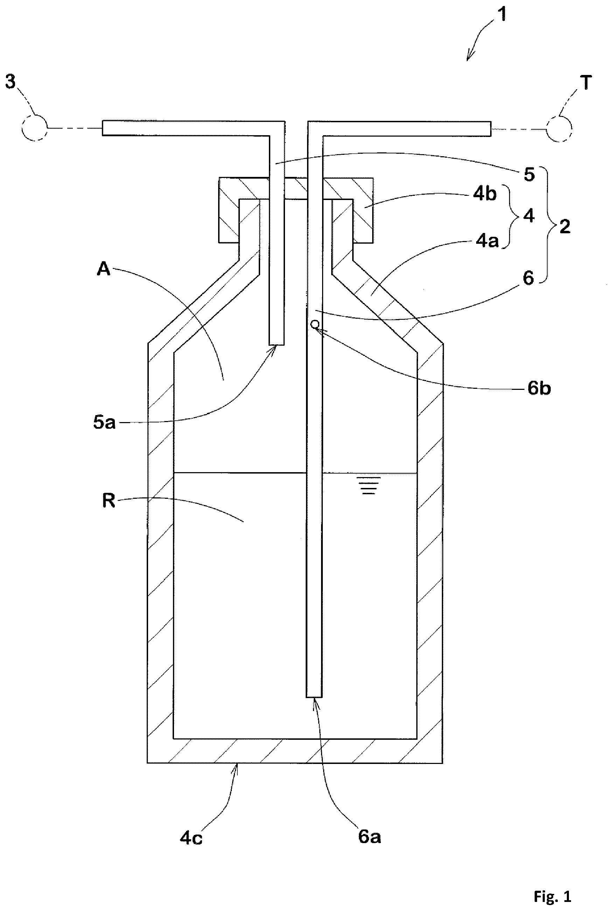

FIG. 1 is a schematic view of a puncture repair kit 1 of the present embodiment. As shown in FIG. 1, the puncture repair kit 1 is suitably used to fill a punctured tire T with a puncture repair liquid R and compressed air A. The puncture repair kit 1 of the present embodiment includes a bottle unit 2, and a compressor 3 for supplying the compressed air A into the bottle unit 2.

The bottle unit 2 of the present embodiment includes a bottle container 4 capable of storing the puncture repair liquid R therein, a supply pipe 5 for supplying the compressed air A into the bottle container 4, and a discharge pipe 6 for mixing and discharging the puncture repair liquid R and the compressed air A from the bottle container 4. The bottle container 4 includes a container body 4a and a cap 4b, for example. The supply pipe 5 and the discharge pipe 6 of the present embodiment each provide communication between the outside and inside of the bottle container 4 via the cap 4b.

The supply pipe 5 has an opening 5a opened inside the bottle container 4, for example. The discharge pipe 6 of the present embodiment has a first opening 6a opened inside the bottle container 4, and a second opening 6b opened at a position different from the first opening 6a in a height direction of the bottle container 4 inside the bottle container 4. Here, the height direction of the bottle container 4 is a vertical direction in a state in which the bottle container 4 is held when filling with the puncture repair liquid R is performed.

The discharge pipe 6 allows the puncture repair liquid R and the compressed air A to be mixed thereinside. Accordingly, the bottle unit 2 of the present embodiment can fill the tire T with the puncture repair liquid R and the compressed air A at the same time, and can supply the puncture repair liquid R concentratively to a punctured part with the compressed air A even if the amount of the puncture repair liquid R is small. Therefore, the bottle unit 2 of the present embodiment allows puncture repair to be performed in a short time.

As a more preferable mode, the bottle container 4 can be held in a first posture in which the first opening 6a is positioned in the puncture repair liquid R and the second opening 6b is positioned outside the puncture repair liquid R. FIG. 1 illustrates a state in which the bottle container 4 of the present embodiment is held in the first posture when filling with the puncture repair liquid R is performed.

The first posture of the present embodiment is a posture in which a bottom portion 4c of the bottle container 4 is directed downward. Such a bottle unit 2 can mix the puncture repair liquid R supplied through the first opening 6a and the compressed air A supplied through the second opening 6b, inside the discharge pipe 6, when the tire T is filled with the puncture repair liquid R.

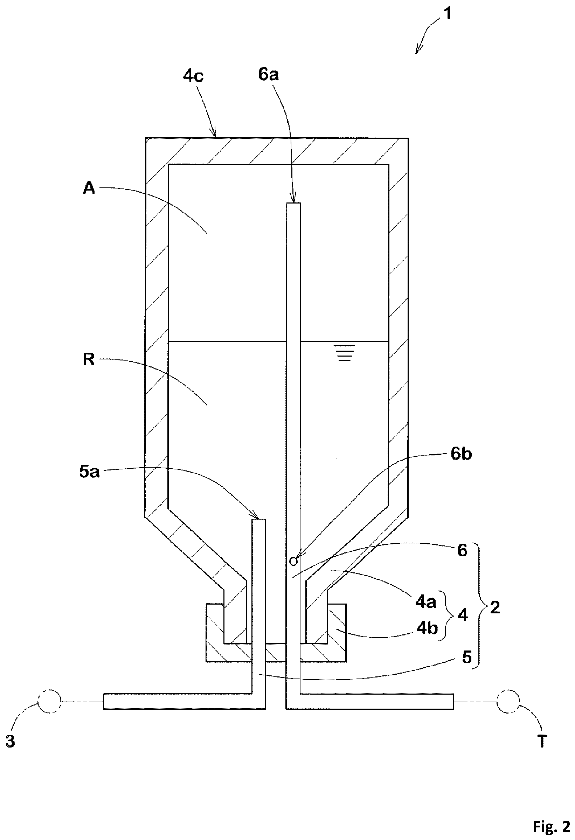

FIG. 2 is a schematic view of the puncture repair kit 1 when the bottle container 4 is held in a second posture. As shown in FIG. 2, the bottle container 4 of the present embodiment can be held in the second posture in which the first opening 6a is positioned outside the puncture repair liquid R and the second opening 6b is positioned in the puncture repair liquid R when filling with the puncture repair liquid R is performed.

The second posture of the present embodiment is a posture in which the cap 4b of the bottle container 4 is directed downward. Such a bottle unit 2 can mix the compressed air A supplied through the first opening 6a and the puncture repair liquid R supplied through the second opening 6b, inside the discharge pipe 6, when the tire T is filled with the puncture repair liquid R.

As shown in FIG. 1 and FIG. 2, the bottle container 4 can be preferably held in the first posture or the second posture when filling with the puncture repair liquid R is performed. The bottle container 4 can be used selectively in the first posture or the second posture according to use conditions thereof or the like, when filling with the puncture repair liquid R is performed.

The opening 5a is formed at an end portion of the supply pipe 5, for example. The opening 5a of the present embodiment is positioned outside the puncture repair liquid R in the first posture, and is positioned in the puncture repair liquid R in the second posture. The opening 5a of the present embodiment is formed near the second opening 6b of the discharge pipe 6.

The opening 5a allows the length of the supply pipe 5 to be shortened, thereby serving to reduce the size of the bottle unit 2. The position of the opening 5a is not limited thereto, and may be formed near the first opening 6a of the discharge pipe 6, for example.

The first opening 6a is preferably formed at an end portion of the discharge pipe 6. The first opening 6a of the present embodiment is formed near the bottom portion 4c of the bottle container 4.

The first opening 6a serves to discharge all the puncture repair liquid R in a short time when filling with the puncture repair liquid R is performed in the first posture. In addition, this first opening 6a allows the puncture repair liquid R and the compressed air A to be mixed even if the volume of the compressed air A is small, when filling with the puncture repair liquid R is performed in the second posture, thereby serving to reduce the size of the bottle container 4.

The second opening 6b is preferably formed on a side opposite to the end portion of the discharge pipe 6 in the height direction of the bottle container 4. The second opening 6b of the present embodiment is formed near the cap 4b of the bottle container 4.

The second opening 6b allows the puncture repair liquid R and the compressed air A to be mixed even if the volume of the compressed air A is small, when filling with the puncture repair liquid R is performed in the first posture, thereby serving to reduce the size of the bottle container 4. In addition, the second opening 6b serves to discharge all the puncture repair liquid R in a short time, when filling with the puncture repair liquid R is performed in the second posture.

The second opening 6b is at least one hole formed in the side surface of the discharge pipe 6, for example. An opening area S2 of the second opening 6b is preferably 0.1 to 0.9 times an opening area S1 of the first opening 6a, and more preferably 0.2 to 0.6 times the opening area S1 of the first opening 6a. Such a discharge pipe 6 is suitable to mix the puncture repair liquid R and the compressed air A thereinside and to fill the tire T with a mixture thereof in an aerosolized form. Here, the opening area S1 of the first opening 6a represents a cross-sectional area of the inside of the discharge pipe 6, and the opening area S2 of the second opening 6b represents the sum of the opening areas of all the holes.

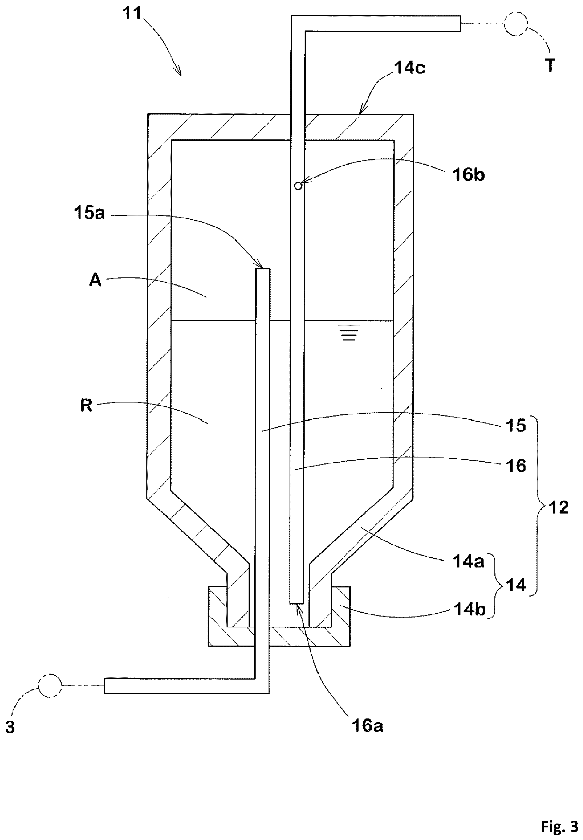

FIG. 3 is a schematic view of a puncture repair kit 11 of a second embodiment. As shown in FIG. 3, the puncture repair kit 11 of the second embodiment includes a bottle unit 12 and a compressor 3, similarly to the above-described puncture repair kit 1.

Similarly to the above-described bottle unit 2, the bottle unit 12 of the second embodiment includes a bottle container 14 capable of storing a puncture repair liquid R therein, a supply pipe 15 for supplying compressed air A, and a discharge pipe 16 for mixing and discharging the puncture repair liquid R and the compressed air A. Similarly to the above-described bottle container 4, the bottle container 14 includes a container body 14a and a cap 14b, for example.

The supply pipe 15 of the second embodiment provides communication between the outside and inside of the bottle container 14 via the cap 14b. The discharge pipe 16 of the second embodiment provides communication between the outside and inside of the bottle container 14 via a bottom portion 14c of the container body 14a.

Similarly to the above-described supply pipe 5, the supply pipe 15 has an opening 15a opened inside the bottle container 14, for example. Similarly to the above-described discharge pipe 6, the discharge pipe 16 of the second embodiment has a first opening 16a opened inside the bottle container 14, and a second opening 16b opened at a position different from the first opening 16a in a height direction of the bottle container 14 inside the bottle container 14.

Similarly to the above-described discharge pipe 6, the discharge pipe 16 allows the puncture repair liquid R and the compressed air A to be mixed thereinside. Accordingly, the bottle unit 12 of the second embodiment can fill a tire T with the puncture repair liquid R and the compressed air A at the same time, and can supply the puncture repair liquid R concentratively to a punctured part with the compressed air A even if the amount of the puncture repair liquid R is small. Therefore, the bottle unit 12 of the second embodiment allows puncture repair to be performed in a short time.

FIG. 3 illustrates a state in which the bottle container 14 of the second embodiment is held in a first posture when filling with the puncture repair liquid R is performed. In the second embodiment, the first posture in which the first opening 16a is positioned in the puncture repair liquid R and the second opening 16b is positioned outside the puncture repair liquid R is a posture in which the cap 14b of the bottle container 14 is directed downward. Such a bottle unit 12 can mix the puncture repair liquid R supplied through the first opening 16a and the compressed air A supplied through the second opening 16b, inside the discharge pipe 16, when the tire T is filled with the puncture repair liquid R.

Although not shown, the bottle container 14 of the second embodiment may be held in a second posture when filling with the puncture repair liquid R is performed. In the second embodiment, the second posture in which the first opening 16a is positioned outside the puncture repair liquid R and the second opening 16b is positioned in the puncture repair liquid R is a posture in which the bottom portion 14c of the bottle container 14 is directed downward. Such a bottle unit 12 can mix the compressed air A supplied through the first opening 16a and the puncture repair liquid R supplied through the second opening 16b, inside the discharge pipe 16, when the tire T is filled with the puncture repair liquid R.

Similarly to the above-described opening 5a, the opening 15a is formed at an end portion of the supply pipe 15, for example. The opening 15a of the second embodiment is positioned outside the puncture repair liquid R in the first posture, and is positioned in the puncture repair liquid R in the second posture. The opening 15a of the second embodiment is formed near the second opening 16b of the discharge pipe 16.

Similarly to the above-described first opening 6a, the first opening 16a is preferably formed at an end portion of the discharge pipe 16. The first opening 16a of the second embodiment is formed near the cap 14b of the bottle container 14.

The first opening 16a serves to discharge all the puncture repair liquid R in a short time when filling with the puncture repair liquid R is performed in the first posture. In addition, this first opening 16a allows the puncture repair liquid R and the compressed air A to be mixed even if the volume of the compressed air A is small, when filling with the puncture repair liquid R is performed in the second posture, thereby serving to reduce the size of the bottle container 14.

Similarly to the above-described second opening 6b, the second opening 16b is preferably formed on a side opposite to the end portion of the discharge pipe 16 in the height direction of the bottle container 14. The second opening 16b of the second embodiment is formed near the bottom portion 14c of the bottle container 14.

The second opening 16b allows the puncture repair liquid R and the compressed air A to be mixed even if the volume of the compressed air A is small, when filling with the puncture repair liquid R is performed in the first posture, thereby serving to reduce the size of the bottle container 14. In addition, the second opening 16b serves to discharge all the puncture repair liquid R in a short time when filling with the puncture repair liquid R is performed in the second posture.

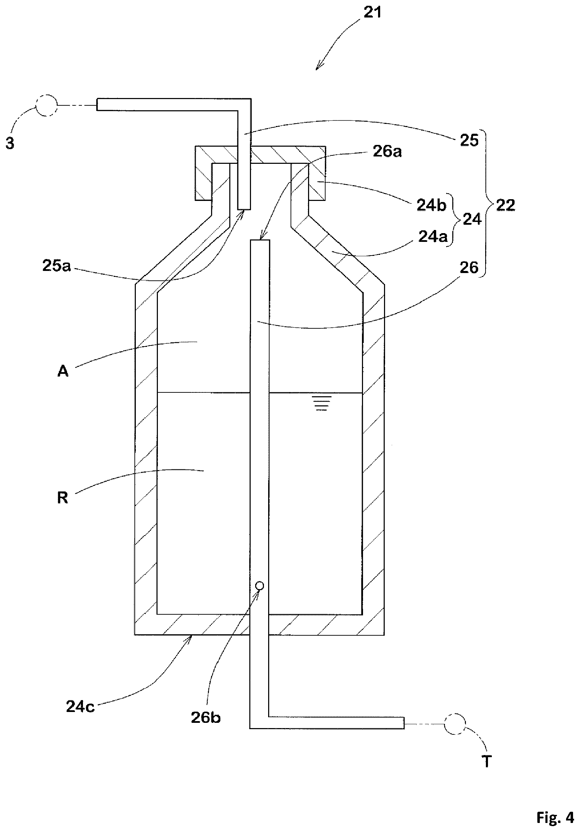

FIG. 4 is a schematic view of a puncture repair kit 21 of a third embodiment. As shown in FIG. 4, the puncture repair kit 21 of the third embodiment includes a bottle unit 22 and a compressor 3, similarly to the above-described puncture repair kit 1.

Similarly to the above-described bottle unit 2, the bottle unit 22 of the third embodiment includes a bottle container 24 capable of storing a puncture repair liquid R therein, a supply pipe 25 for supplying compressed air A, and a discharge pipe 26 for mixing and discharging the puncture repair liquid R and the compressed air A. Similarly to the above-described bottle container 4, the bottle container 24 includes a container body 24a and a cap 24b, for example.

The supply pipe 25 of the third embodiment provides communication between the outside and inside of the bottle container 24 via the cap 24b. The discharge pipe 26 of the third embodiment provides communication between the outside and inside of the bottle container 24 via a bottom portion 24c of the container body 24a.

Similarly to the above-described supply pipe 5, the supply pipe 25 has an opening 25a opened inside the bottle container 24, for example. Similarly to the above-described discharge pipe 6, the discharge pipe 26 of the third embodiment has a first opening 26a opened inside the bottle container 24, and a second opening 26b opened at a position different form the first opening 26a in a height direction of the bottle container 24 inside the bottle container 24.

Similarly to the above-described discharge pipe 6, the discharge pipe 26 allows the puncture repair liquid R and the compressed air A to be mixed thereinside. Accordingly, the bottle unit 22 of the third embodiment can fill a tire T with the puncture repair liquid R and the compressed air A at the same time, and can supply the puncture repair liquid R concentratively to a punctured part with the compressed air A even if the amount of the puncture repair liquid R is small. Therefore, the bottle unit 22 of the third embodiment allows puncture repair to be performed in a short time.

FIG. 4 illustrates a state in which the bottle container 24 of the third embodiment is held in a second posture when filling with the puncture repair liquid R is performed. In the third embodiment, the second posture in which the first opening 26a is positioned outside the puncture repair liquid R and the second opening 26b is positioned in the puncture repair liquid R is a posture in which the bottom portion 24c of the bottle container 24 is directed downward. Such a bottle unit 22 can mix the compressed air A supplied through the first opening 26a and the puncture repair liquid R supplied through the second opening 26b, inside the discharge pipe 26, when the tire T is filled with the puncture repair liquid R.

Although not shown, the bottle container 24 of the third embodiment may be held in a first posture when filling with the puncture repair liquid R is performed. In the third embodiment, the first posture in which the first opening 26a is positioned in the puncture repair liquid R and the second opening 26b is positioned outside the puncture repair liquid R is a posture in which the cap 24b of the bottle container 24 is directed downward. Such a bottle unit 22 can mix the puncture repair liquid R supplied through the first opening 26a and the compressed air A supplied through the second opening 26b, inside the discharge pipe 26, when the tire T is filled with the puncture repair liquid R.

Similarly to the above-described opening 5a, the opening 25a is formed at an end portion of the supply pipe 25, for example. The opening 25a of the third embodiment is positioned in the puncture repair liquid R in the first posture, and is positioned outside the puncture repair liquid R in the second posture. The opening 25a of the third embodiment is formed near the first opening 26a of the discharge pipe 26.

Similarly to the above-described first opening 6a, the first opening 26a is preferably formed at an end portion of the discharge pipe 26. The first opening 26a of the third embodiment is formed near the cap 24b of the bottle container 24.

The first opening 26a serves to discharge all the puncture repair liquid R in a short time when filling with the puncture repair liquid R is performed in the first posture. In addition, this first opening 26a allows the puncture repair liquid R and the compressed air A to be mixed even if the volume of compressed air A is small, when filling with the puncture repair liquid R is performed in the second posture, thereby serving to reduce the size of the bottle container 14.

Similarly to the above-described second opening 6b, the second opening 26b is preferably formed on a side opposite to the end portion of the discharge pipe 26 in the height direction of the bottle container 24. The second opening 26b of the third embodiment is formed near the bottom portion 24c of the bottle container 24.

The second opening 26b allows the puncture repair liquid R and the compressed air A to be mixed even if the volume of the compressed air A is small, when filling with the puncture repair liquid R is performed in the first posture, thereby serving to reduce the size of the bottle container 24. In addition, this second opening 26b serves to discharge all the puncture repair liquid R in a short time when filling with the puncture repair liquid R is performed in the second posture.

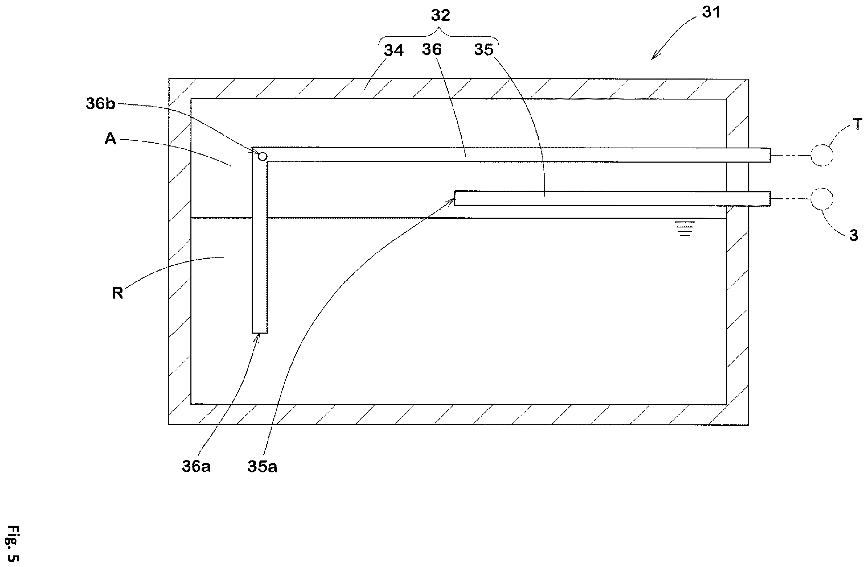

FIG. 5 is a schematic view of a puncture repair kit 31 of a fourth embodiment. As shown in FIG. 5, the puncture repair kit 31 of the fourth embodiment includes a bottle unit 32 and a compressor 3, similarly to the above-described puncture repair kit 1.

Similarly to the above-described bottle unit 2, the bottle unit 32 of the fourth embodiment includes a bottle container 34 capable of storing a puncture repair liquid R therein, a supply pipe 35 for supplying compressed air A, and a discharge pipe 36 for mixing and discharging the puncture repair liquid R and the compressed air A. The supply pipe 35 and the discharge pipe 36 of the fourth embodiment each provide communication between the outside and inside of the bottle container 34 via the side surface of the bottle container 34, in a state in which the supply pipe 35 and the discharge pipe 36 are held when filling with the puncture repair liquid R is performed.

Similarly to the above-described supply pipe 5, the supply pipe 35 has an opening 35a opened inside the bottle container 34, for example. Similarly to the above-described discharge pipe 6, the discharge pipe 36 of the fourth embodiment has a first opening 36a opened inside the bottle container 34, and a second opening 36b opened at a position different from the first opening 36a in a height direction of the bottle container 34 inside the bottle container 34.

Similarly to the above-described discharge pipe 6, the discharge pipe 36 allows the puncture repair liquid R and the compressed air A to be mixed thereinside. Accordingly, the bottle unit 32 of the fourth embodiment can fill a tire T with the puncture repair liquid R and the compressed air A at the same time, and can supply the puncture repair liquid R concentratively to a punctured part with the compressed air A even if the amount of the puncture repair liquid R is small. Therefore, the bottle unit 32 of the fourth embodiment allows puncture repair to be performed in a short time.

FIG. 5 illustrates a state in which the bottle container 34 of the fourth embodiment is held in a first posture when filling with the puncture repair liquid R is performed. Such a bottle unit 32 can mix the puncture repair liquid R supplied through the first opening 36a and the compressed air A supplied through the second opening 36b, inside the discharge pipe 36, when the tire T is filled with the puncture repair liquid R.

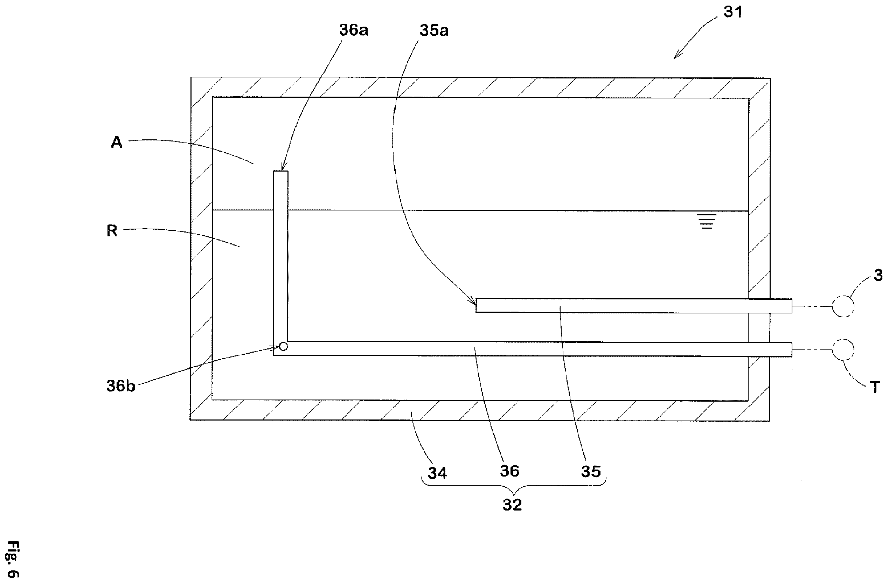

FIG. 6 is a schematic view of the puncture repair kit 31 in FIG. 5 when the bottle container 34 is held in a second posture. As shown in FIG. 6, the bottle container 34 of the fourth embodiment may be held in the second posture when filling with the puncture repair liquid R is performed. Such a bottle unit 32 can mix the compressed air A supplied through the first opening 36a and the puncture repair liquid R supplied through the second opening 36b, inside the discharge pipe 36, when the tire T is filled with the puncture repair liquid R.

As shown in FIG. 5 and FIG. 6, the bottle container 34 can be preferably held in the first posture or the second posture when filling with the puncture repair liquid R is performed. The bottle container 34 can be used selectively in the first posture or the second posture according to use conditions thereof or the like, when filling with the puncture repair liquid R is performed.

Although the particularly preferred embodiments of the present invention have been described in detail above, the present invention is not limited to the above-described embodiments, and various modifications can be made to implement the present invention.

### [Additional Note]

The present disclosure is as follows.

### [Present Invention 1]

A bottle unit for performing filling with a puncture repair liquid and compressed air, the bottle unit including: a bottle container capable of storing the puncture repair liquid therein; a supply pipe for supplying the compressed air into the bottle container; and a discharge pipe for mixing and discharging the puncture repair liquid and the compressed air from the bottle container, wherein the discharge pipe has a first opening opened inside the bottle container, and a second opening opened at a position different from the first opening in a height direction of the bottle container inside the bottle container.

### [Present Invention 2]

The bottle unit according to present invention 1, wherein the first opening is formed at an end portion of the discharge pipe.

### [Present Invention 3]

The bottle unit according to present invention 2, wherein the second opening is formed on a side opposite to the end portion of the discharge pipe in the height direction of the bottle container.

### [Present Invention 4]

The bottle unit according to any one of present inventions 1 to 3, wherein the second opening is at least one hole formed in a side surface of the discharge pipe.

### [Present Invention 5]

The bottle unit according to any one of present inventions 1 to 4, wherein
the bottle container can be held in a first posture in which the first opening is positioned in the puncture repair liquid and the second opening is positioned outside the puncture repair liquid, when filling with the puncture repair liquid is performed.

### [Present Invention 6]

The bottle unit according to present invention 5, wherein
the bottle container can be held in the first posture, or second posture in which the first opening is positioned outside the puncture repair liquid and the second opening is positioned in the puncture repair liquid, when filling with the puncture repair liquid is performed.

### [Present Invention 7]

The bottle unit according to any one of present inventions 1 to 4, wherein
the bottle container can be held in a second posture in which the first opening is positioned outside the puncture repair liquid and the second opening is positioned in the puncture repair liquid, when filling with the puncture repair liquid is performed.

### [Present Invention 8]

A puncture repair kit including the bottle unit according to any one of present inventions 1 to 7, and a compressor for supplying compressed air.

## Claims

1. A bottle unit (2, 12, 22, 32) for performing filling with a puncture repair liquid (R) and compressed air (A), the bottle unit (2, 12, 22, 32) comprising:
a bottle container (4, 14, 24, 34) capable of storing the puncture repair liquid (R) therein;
a supply pipe (5, 15, 25, 35) for supplying the compressed air (A) into the bottle container (4, 14, 24, 34); and
a discharge pipe (6, 16, 26, 36) for mixing and discharging the puncture repair liquid (R) and the compressed air (A) from the bottle container (4, 14, 24, 34), wherein
the discharge pipe (6, 16, 26, 36) has a first opening (6a, 16a, 26a, 36a) opened inside the bottle container (4, 14, 24, 34), and a second opening (6b, 16b, 26b, 36b) opened at a position different from the first opening (6a, 16a, 26a, 36a) in a height direction of the bottle container (4, 14, 24, 34) inside the bottle container (4, 14, 24, 34).

2. The bottle unit (2, 12, 22, 32) according to claim 1, wherein the first opening (6a, 16a, 26a, 36a) is formed at an end portion of the discharge pipe (6, 16, 26, 36).

3. The bottle unit (2, 12, 22, 32) according to claim 2, wherein the second opening (6b, 16b, 26b, 36b) is formed on a side opposite to the end portion of the discharge pipe (6, 16, 26, 36) in the height direction of the bottle container (4, 14, 24, 34).

4. The bottle unit (2, 12, 22, 32) according to any one of claims 1 to 3, wherein the second opening (6b, 16b, 26b, 36b) is at least one hole formed in a side surface of the discharge pipe (6, 16, 26, 36).

5. The bottle unit (2, 12, 22, 32) according to any one of claims 1 to 4, wherein the bottle container (4, 14, 24, 34) can be held in a first posture in which the first opening (6a, 16a, 26a, 36a) is positioned in the puncture repair liquid (R) and the second opening (6b, 16b, 26b, 36b) is positioned outside the puncture repair liquid (R), when filling with the puncture repair liquid (R) is performed.

6. The bottle unit (2, 12, 22, 32) according to claim 5, wherein the bottle container (4, 14, 24, 34) can be held in the first posture or a second posture in which the first opening (6a, 16a, 26a, 36a) is positioned outside the puncture repair liquid (R) and the second opening (6b, 16b, 26b, 36b) is positioned in the puncture repair liquid (R), when filling with the puncture repair liquid (R) is performed.

7. The bottle unit (2, 12, 22, 32) according to any one of claims 1 to 4, wherein the bottle container (4, 14, 24, 34) can be held in a second posture in which the first opening (6a, 16a, 26a, 36a) is positioned outside the puncture repair liquid (R) and the second opening (6b, 16b, 26b, 36b) is positioned in the puncture repair liquid (R), when filling with the puncture repair liquid (R) is performed.

8. A puncture repair kit (1, 11, 21, 31) comprising the bottle unit (2, 12, 22, 32) according to any one of claims 1 to 7, and a compressor (3) for supplying compressed air (A).
